# EUROPÄISCHE PATENTSCHRIFT

(11) **EP 2 284 426 B1**
(45) Veröffentlichungstag und Bekanntmachung des Hinweises auf die Patenterteilung: **24.10.2018**
(21) Anmeldenummer: 10159701.1
(22) Anmeldetag: 13.04.2010
(51) Int. Cl.: F16J 15/32, F01D 11/00, F01D 11/02

(54) **Strömungsmaschine**
Turbomachine
Turbomachine

(30) Priorität: 13.08.2009 DE 102009037393
(43) Veröffentlichungstag der Anmeldung: 16.02.2011
(73) Patentinhaber: MAN Diesel & Turbo SE, 86153 Augsburg (DE)
(72) Erfinder: Aschenbruck, Emil, 47167 Duisburg (DE); Blaswich, Michael, 46045 Oberhausen (DE)

(56) Entgegenhaltungen:
- EP-A1- 1 277 917
- EP-A2- 0 355 649
- US-A- 5 181 728
- US-A1- 2007 120 327

## Beschreibung

Die Erfindung betrifft eine Strömungsmaschine gemäß dem Oberbegriff von Patentanspruch 1.

Eine Strömungsmaschine der eingangsgenannten Art ist aus EP 1 277 917 A1 bekannt. Weiterhin ist eine Strömungsmaschine aus EP 0 834 688 A1 bekannt. Eine Bürstendichtung gemäß dem Oberbegriff von Patentanspruch 1 ist z.B. auch aus DE 601 24 204 T2 bekannt.

Zu den Strömungsmaschinen gehören beispielsweise Propeller- und Repellermaschinen, Kreiselpumpen und jegliche Turbomaschinen, wie z.B. Gasturbinen, Dampfturbinen und Rotationsverdichter, wie z.B. Radialverdichter und Axialverdichter.

Bei Strömungsmaschinen wie einer Turbomaschine kann deren jeweiliger Rotor mittels Labyrinthspitzendichtungen, Gleitringdichtungen oder Bürstendichtungen (welche auch als Brushseals bezeichnet werden) gegen Fluidleckage abgedichtet werden. Im Fall einer Bürstendichtung haben Dichtborsten (auch als Bürstendrähte der Bürstendichtung direkten Kontakt zu dem beispielsweise als Welle ausgebildeten der Turbomaschine. Die Bürstendichtung begrenzt z.B. die Menge des aus einem Strömungsteil der Turbomaschine in eine Lagerperipherie der Turbomaschine einströmenden Arbeitsfluids, wie z.B. die Menge an Kompressorluft.

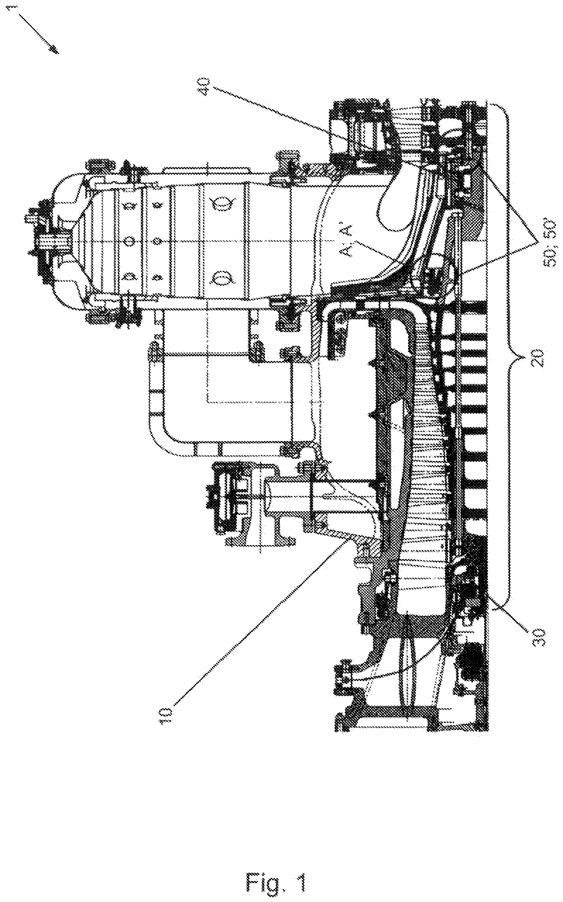

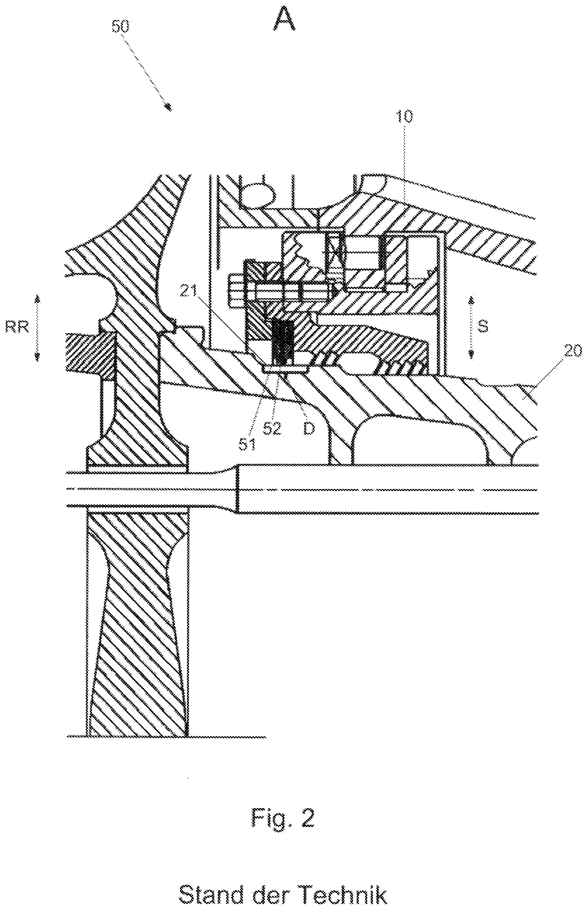

Die Figuren 1 und 2 zeigen eine als Gasturbine ausgebildete Strömungsmaschine 1 gemäß dem Oberbegriff von Patentanspruch 1. Wie aus Fig.1 und Fig.2 ersichtlich, weist die Strömungsmaschine 1 einen hier als Gasturbinengehäuse ausgebildeten Stator 10, einen relativ zum Stator 10 drehbar gelagerten hier als Welle ausgebildeten Rotor 20. Rotationslager 30, 40, die die drehbare Lagerung des Rotors 20 im Stator 10 realisieren, und zwei Bürstendichtungen 50 auf, die einen sich in einer Radialrichtung RR gebildeten Spalt S zwischen Stator 10 und Rotor 20 gegen Fluiddurchgang abdichten.

Wie insbesondere aus Fig.2 ersichtlich, weist jede Bürstendichtung 50 einen Bürstenhalter 51 und eine Mehrzahl von Dichtborsten 52 auf, die jeweils ein erstes Ende, das an dem Bürstenhalter 51 befestigt ist, und ein zweites Ende aufweisen, das mit einer hier von einer Außenumfangsfläche 21 des Rotors 20 gebildeten Dichtfläche D in Berührungskontakt steht, so dass eine Dichtborsten-Dichtflächen-Kontaktzone gebildet ist, wobei die Dichtfläche D relativ zu den zweiten Enden der jeweiligen Dichtborsten 52 rotationsverlagerbar und hier insbesondere drehbar ist.

Im Betrieb der Strömungsmaschine 1 kommt es durch die Relativbewegung zwischen rotierendem Rotor 20 und hier statischer Bürstendichtung 50 aufgrund der Reibung zwischen den Dichtborsten 52 und der Außenumfangsfläche 21 des Rotors 20 zur Erwärmung der Dichtfläche D des Rotors 20 und der Dichtborsten 52.

Problematisch an dieser herkömmlichen Abdichtung ist jedoch, dass es bei Vorliegen eines Rundlauffehlers in der Kontaktzone von Dichtfläche D und Dichtborsten 52 zu einer ungleichmäßigen Erwärmung der Dichtfläche D kommt. Diese ungleichmäßige Erwärmung kann zur Verstärkung des Rundlauffehlers und zu einer Verformung des Rotors 20 (hier einer Verformung in Form einer Durchbiegung zwischen den Rotationslagern 30 und 40 der Welle) führen, die den weiteren Betrieb der Strömungsmaschine 1 aufgrund unzulässig starker Rotorschwingungen verhindert.

Der Erfindung liegt die Aufgabe zugrunde, eine Strömungsmaschine gemäß dem Oberbegriff von Patentanspruch 1 bereitzustellen, bei der die Dichtborsten-Dichtflächen-Kontaktzone thermisch entkoppelt ist, so dass eine den Betrieb der Strömungsmaschine beeinträchtigende wärmeeintragbasierte Verformung in der Strömungsmaschine verhindert wird.

Dies wird mit einer Strömungsmaschine gemäß Patentanspruch 1 erreicht. Weiterbildungen der Erfindung sind in den abhängigen Patentansprüchen definiert.

Gemäß der Erfindung weist eine Strömungsmaschine einen Stator, einen relativ zum Stator drehbar gelagerten Rotor und eine Bürstendichtung auf, die einen sich in einer Radialrichtung des Rotors gebildeten Spalt zwischen Stator und Rotor gegen Fluiddurchgang abdichtet. Die Bürstendichtung weist einen Bürstenhalter und eine Mehrzahl von Dichtborsten auf, die jeweils ein erstes Ende, das an dem Bürstenhalter befestigt ist, und ein zweites Ende haben, das mit einer Dichtfläche in Berührungskontakt steht, so dass eine Dichtborsten-Dichtflächen-Kontaktzone gebildet ist. Die Dichtfläche ist relativ zu den zweiten Enden der jeweiligen Dichtborsten rotationsverlagerbar.

Die erfindungsgemäße Strömungsmaschine zeichnet sich dadurch aus, dass die Dichtfläche von einer Umfangsfläche einer zwischen Stator und Rotor angeordneten den Spalt radial unterteilenden Zwischenhülse bzw. Zwischenbüchse ist.

Durch Verlagerung der Dichtfläche auf eine Zwischenhülse wird die Dichtborsten-Dichtflächen-Kontaktzone thermisch entkoppelt, so dass eine den Betrieb der Strömungsmaschine beeinträchtigende wärmeeintragbasierte Verformung in der Strömungsmaschine verhindert wird.

Gemäß der Erfindung ist die Zwischenhülse an einem rotierenden Teil der Bürstendichtung befestigt. Diese Befestigung erfolgt vorteilhafterweise so, dass einerseits ausreichende Stabilität erzielt wird und andererseits ein möglichst geringer Wärmeübergang zwischen Zwischenhülse und dem Teil erzielt wird, an dem die Zwischenhülse befestigt ist. Der geringe Wärmeübergang kann z.B. durch möglichst kleine Kontaktflächen und/oder durch Vorsehen einer Isolationsschicht zwischen den Kontaktflächen von Zwischenhülse und diese befestigendem Teil erzielt werden.

Gemäß der Erfindung ist der Bürstenhalter am Stator angebracht und die Zwischenhülse ist mit dem Rotor drehend an diesem angebracht. In diesem Fall ist die die Dichtfläche bildende Umfangsfläche der Zwischenhülse eine Außenumfangsfläche.

Ferner kann erfindungsgemäß der Rotor sowohl z.B. von einer in einem Stator (z.B. einem Gehäuse) rotierenden Welle als auch z.B. von einem um einen Stator (z.B. eine Achse) rotierenden Gehäuse gebildet sein. Die jeweilige Lösung kann sich aus den gewünschten Betriebseigenschaften und den konstruktiven Gegebenheiten ergeben.

Gemäß einer Ausführungsform der Erfindung unterteilt die Zwischenhülse den Spalt radial in einen an die Dichtfläche angrenzenden ersten Spaltabschnitt und einen an eine der Dichtfläche abgewandte Umfangsfläche der Zwischenhülse angrenzenden zweiten Spaltabschnitt, wobei eine Radialerstreckung des zweiten Spaltabschnitts größer als Null ist.

Mit anderen Worten ist zwischen Zwischenhülse und dem diese befestigenden Teil (dem Rotor) ein Luftspalt vorhanden, weicher in vorteilhafterweise eine zusätzliche Wärmeisolation zwischen Zwischenhülse und dem diese befestigenden Teil gewährleistet. Damit wird der Wärmeübergang von der Dichtfläche und dem die Zwischenhülse befestigenden Teil noch mehr erschwert, wodurch ein wärmeeintragbedingter Verzug des die Zwischenhülse befestigenden Teils noch sicherer vermieden wird.

Erfindungsgemäß weist die Zwischenhülse einen Flansch auf, über den die Zwischenhülse drehfest an einen Flanschmontageabschnitt des Rotors montiert ist. Weiterhin erfindungsgemäß ist der Rotor nur durch die Verbindung von dessen Flanschmontageabschnitt mit dem Flansch mit der Zwischenhülse verbunden.

Diese Ausgestaltung der Erfindung ist besonders hinsichtlich der Gewährleistung möglichst kleiner Kontaktflächen zwischen Zwischenhülse und dem diese befestigenden Teil (dem Rotor) bei gleichzeitiger Gewährleistung ausreichender Stabilität der Befestigung vorteilhaft.

Gemäß noch einer weiteren Ausführungsform der Erfindung ist der Flansch mittels lösbarer Befestigungsmittel an den Flanschmontageabschnitt montiert. Solche Befestigungsmittel können beispielsweise Schraubverbindungen, Nietverbindungen, Klemmverbindungen usw. sein. Durch die lösbare Verbindung wird insbesondere ein Austausch von z.B. verschlissenen Zwischenhülsen erleichtert.

Die Flanschverbindung schafft außerdem eine einfache Möglichkeit dafür, zwischen dem Flansch und dem Flanschmontageabschnitt eine Wärmeisolationslage einzubringen.

Gemäß einer weiteren Ausführungsform der Erfindung ist der Flansch an einem Axialende der Zwischenhülse angeordnet, so dass der Flansch an dem Axialende eine ringförmige Flanschfläche aufweist, welche an einer Montagefläche des Flanschmontageabschnitts fluiddicht anliegt.

Diese Ausgestaltung der Erfindung gewährleistet zuverlässig eine Abdichtung gegen Fluiddurchgang zwischen der Zwischenhülse und dem diese befestigenden Teil.

Gemäß noch einer Ausführungsform der Erfindung ist der Rotor von einer Welle gebildet und ist die Zwischenhülse drehfest auf den Rotor montiert, so dass die Dichtfläche von einer Außenumfangsfläche der Zwischenhülse gebildet ist, wobei der Bürstenhalter drehfest an dem Stator angebracht ist.

Eine solche Ausgestaltung der Erfindung lässt sich besonders einfach und funktionssicher herstellen.

Gemäß noch einer weiteren Ausführungsform der Erfindung ist ein Innendurchmesser der Zwischenhülse größer als ein Außendurchmesser der Welle, so dass zwischen einer Innenumfangsfläche der Zwischenhülse und einer Außenumfangsfläche der Welle ein Ringspalt gebildet ist.

Diese Ausgestaltung der Erfindung realisiert auf einfache und robuste Weise einen wärmeisolierenden Luftspalt zwischen der Zwischenhülse und dem diese befestigenden Teil, welches hier von dem als Welle ausgebildeten Rotor gebildet ist.

Gemäß Ausführungsformen der Erfindung ist die Strömungsmaschine von einer Turbomaschine, insbesondere von einer Gasturbine oder einem Turboverdichter, gebildet.

Im Folgenden wird die Erfindung anhand bevorzugter Ausführungsformen und unter Bezugnahme auf die beigefügten Figuren detaillierter beschrieben.
- Fig.1: zeigt in schematischer Schnittansicht den Grundaufbau einer als Gasturbine ausgebildeten Strömungsmaschine.
- Fig.2: zeigt in einem vergrößerten Ausschnitt A von Fig.1 eine Bürstendichtung einer Strömungsmaschine gemäß dem Stand der Technik.
- Fig.3: zeigt in einem vergrößerten Ausschnitt A' von Fig.1 eine Bürstendichtung einer Strömungsmaschine gemäß einer Ausführungsform der Erfindung.

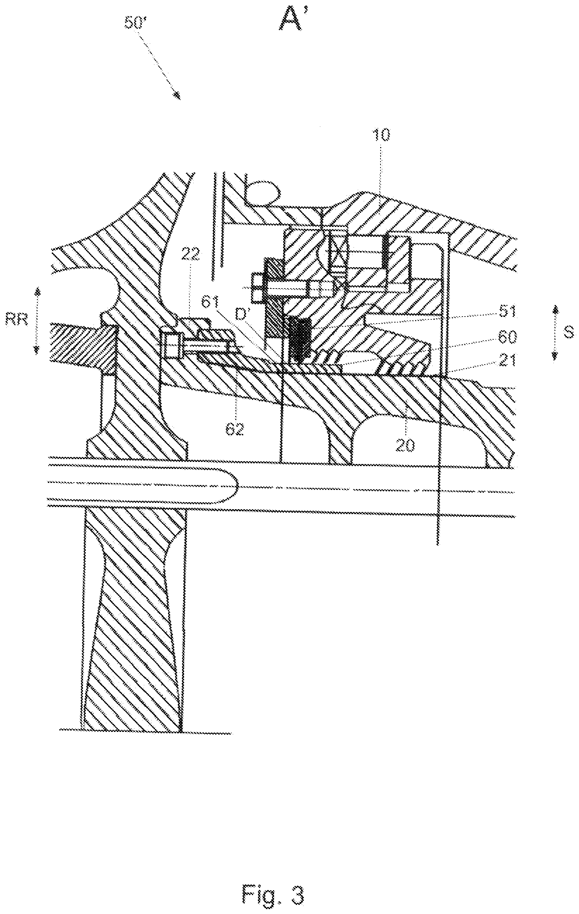

Wie in Fig. 1 und Fig.3 gezeigt, weist eine hier als Gasturbine ausgebildete Strömungsmaschine 1 einen hier als Gasturbinengehäuse ausgebildeten Stator 10, einen relativ zum Stator 10 drehbar gelagerten hier als Welle ausgebildeten Rotor 20, zwei Rotationslager 30, 40, die die drehbare Lagerung des Rotors 20 im Stator 10 realisieren, und zwei Bürstendichtungen 50' auf, die einen sich in einer Radialrichtung RR gebildeten Spalt S zwischen Stator 10 und Rotor 20 gegen Fluiddurchgang abdichten.

Wie insbesondere aus Fig.3 ersichtlich, weist jede Bürstendichtung 50' einen Bürstenhalter 51 und eine Mehrzahl von Dichtborsten 52 auf, die jeweils ein erstes Ende, das an dem Bürstenhalter 51 befestigt ist, und ein zweites Ende aufweisen, das mit einer Dichtfläche D' in Berührungskontakt steht, so dass eine Dichtborsten-Dichtflächen-Kontaktzone gebildet ist, wobei die Dichtfläche D' relativ zu den zweiten Enden der jeweiligen Dichtborsten 52 rotationsverlagerbar und hier insbesondere drehbar ist.

Wie aus Fig.3 ersichtlich, ist die Dichtfläche D' von einer Außenumfangsfläche 61 einer zwischen Stator 10 und Rotor 20 angeordneten den Spalt S radial unterteilenden drehfest auf den Rotor 20 montierten Zwischenhülse 60 gebildet, wobei der Bürstenhalter 51 drehfest an dem Stator 10 angebracht ist.

Die Zwischenhülse 60 unterteilt den Spalt S radial in einen an die Dichtfläche D' angrenzenden ersten Spaltabschnitt und einen an eine der Dichtfläche D' abgewandte Innenumfangsfläche (nicht bezeichnet) der Zwischenhülse 60 angrenzenden zweiten Spaltabschnitt, wobei eine Radialerstreckung des zweiten Spaltabschnitts größer als Null ist.

D.h., ein Innendurchmesser der Zwischenhülse 60 ist größer als ein Außendurchmesser des Rotors (der Welle) 20, so dass zwischen der Innenumfangsfläche der Zwischenhülse 60 und einer Außenumfangsfläche 21 des Rotors 20 ein Ringspalt gebildet ist.

Mit anderen Worten ist zwischen Zwischenhülse 60 und dem diese befestigenden Rotor 20 ein Luftspalt (Ringspalt) vorhanden, welcher in vorteilhafterweise eine Wärmeisolation zwischen Zwischenhülse 60 und dem Rotor 20 gewährleistet. Damit wird ein Wärmeübergang von der Dichtfläche D' auf den Rotor 20 erschwert, wodurch ein wärmeeintragbedingter Verzug des die Zwischenhülse 60 befestigenden Rotors 20 vermieden wird.

Wie ferner aus Fig.3 ersichtlich, weist die Zwischenhülse 60 einen Flansch 62 auf, über den die Zwischenhülse 60 drehfest an einen Flanschmontageabschnitt 22 des Rotors 20 montiert ist. Der Flansch 62 ist an einem Axialende der Zwischenhülse 60 angeordnet, so dass der Flansch 62 an dem Axialende eine ringförmige Flanschfläche (nicht separat bezeichnet) aufweist, welche an einer vertieften Montagefläche (nicht separat bezeichnet) des Flanschmontageabschnitts 22 fluiddicht anliegt. Obwohl in Fig.3 nicht gezeigt, kann zum Erzielen der Fluiddichtheit und einer Wärmeisolation zwischen der ringförmigen Flanschfläche des Flansches 62 und der vertieften Montagefläche des Flanschmontageabschnitts 22 eine Flachdichtung vorgesehen sein.

Wie Fig.3 zeigt, ist der Flansch 62 mittels lösbarer Befestigungsmittel, welche hier in Form einer Schraubverbindung realisiert sind, an den Flanschmontageabschnitt 22 des Rotors 20 montiert.

Im Fazit wird gemäß einer Ausführungsform der Erfindung der hier als Welle ausgebildete Rotor 20 mit einer Zwischenhülse bzw. Zwischenbüchse 60 versehen, wobei die Zwischenhülse 60 mittels eines axialen Flansches 62 und lösbarer Befestigungsmittel mit dem Rotor 20 verbunden ist. Zwischen Zwischenhülse 60 und Rotor 20 befindet sich ein Ringspalt. Die Dichtborsten bzw. Bürstendrähte 52 der Bürstendichtung 50' liegen an der von der Außenumfangsfläche 61 der Zwischenhülse 60 gebildeten Dichtfläche D' an.

Bei einem Rundlauffehler der Zwischenhülse 60 führt somit eine ungleichmäßige Verformung der Zwischenhülse 60 ggf. nur zu einer Verstärkung des Rundlauffehlers an der Zwischenhülse 60, da der Rotor 20 nur durch die Verbindung von dessen Flanschmontageabschnitt 22 mit dem Flansch 62 mit der Zwischenhülse 60 verbunden ist und somit eine direkte Aufheizung des Rotors 20 durch Wärmeeinleitung im Bereich der Bürstendichtung 50' verhindert wird.

Die erfindungsgemäße Lösung lässt sich in allen Fällen anwenden, in denen eine Strömungsmaschine, wie z.B. eine Gasturbine, mit Bürstendichtungen abgedichtet werden soll. Gemäß Ausführungsformen der Erfindung kann die Erfindung z.B. bei Rotoreinheiten in Scheibenbauweise, bei Vollrotoreinheiten und bei geschweißten Rotoreinheiten angewendet werden.

Die erfindungsgemäße Lösung kann zur Abdichtung einer Lagerperipherie einer Strömungsmaschine und zur Abdichtung zwischen einzelnen Stufen der Strömungsmaschine, wie z.B. Kompressor- oder Turbinenstufen, verwendet werden.

### Bezugszeichenliste

- 1: Strömungsmaschine
- 10: Stator
- 20: Rotor
- 21: Außenumfangsfläche
- 22: Flanschmontageabschnitt
- 30: Rotationslager
- 40: Rotationslager
- 50: Bürstendichtung
- 50': Bürstendichtung
- 51: Bürstenhalter
- 52: Dichtborsten
- 60: Zwischenhülse
- 61: Außenumfangsfläche
- 62: Flansch

- D: Dichtfläche
- D': Dichtfläche
- S: Spalt
- RR: Radialrichtung

## Patentansprüche

1. Strömungsmaschine (1) mit einem Stator (10), einem relativ zum Stator (10) drehbar gelagerten Rotor (20) und einer Bürstendichtung (50'), die einen sich in einer Radialrichtung (RR) gebildeten Spalt (S) zwischen Stator (10) und Rotor (20) gegen Fluiddurchgang abdichtet, wobei die Bürstendichtung (50') einen Bürstenhalter (51) und eine Mehrzahl von Dichtborsten (52) aufweist, die jeweils ein erstes Ende, das an dem Bürstenhalter (51) befestigt ist, und ein zweites Ende aufweisen, das mit einer Dichtfläche (D') in Berührungskontakt steht, die Dichtfläche (D') relativ zu den zweiten Enden der jeweiligen Dichtborsten (52) rotationsverlagerbar ist, wobei die Dichtfläche (D') von einer Umfangsfläche einer zwischen Stator (10) und Rotor (20) angeordneten den Spalt (S) radial unterteilenden Zwischenhülse (60) gebildet ist und wobei die Zwischenhülse (60) einen Flansch (62) aufweist, über den die Zwischenhülse (60) drehfest an einen Flanschmontageabschnitt (22) des Rotors (20) montiert ist, **dadurch gekennzeichnet, dass** der Rotor (20) nur durch die Verbindung von dessen Flanschmontageabschnitt (22) mit dem Flansch (62) mit der Zwischenhülse (60) verbunden ist.

2. Strömungsmaschine (1) gemäß Anspruch 1, wobei die Zwischenhülse (60) den Spalt (S) radial in einen an die Dichtfläche (D') angrenzenden ersten Spaltabschnitt und einen an eine der (D') abgewandte Umfangsfläche der Zwischenhülse (60) angrenzenden zweiten Spaltabschnitt und wobei eine Radialerstreckung des zweiten Spaltabschnitts größer als Null ist.

3. Strömungsmaschine (1) gemäß einem der vorhergehenden Ansprüche, wobei der Flansch (62) mittels lösbarer Befestigungsmittel an den Flanschmontageabschnitt (22) montiert ist.

4. Strömungsmaschine (1) gemäß Anspruch 3, wobei der Flansch (62) an einem Axialende der Zwischenhülse (60) angeordnet ist, so dass der Flansch (62) an dem Axialende eine ringförmige Flanschfläche aufweist, welche an einer Montagefläche des Flanschmontageabschnitts (22) fluiddicht anliegt.

5. Strömungsmaschine (1) gemäß einem der Ansprüche 1 bis 4, wobei der Rotor (20) von einer Welle gebildet ist und die Zwischenhülse (60) drehfest auf den Rotor (20) montiert ist, so dass die Dichtfläche (D') von einer Außenumfangsfläche (61) der Zwischenhülse (60) gebildet ist, und der Bürstenhalter (51) drehfest an dem Stator (10) angebracht ist,

6. Strömungsmaschine (1) gemäß Anspruch 5, wobei ein Innendurchmesser der Zwischenhülse (60) größer als ein Außendurchmesser der Welle ist, so dass zwischen einer Innenumfangsfläche der Zwischenhülse (60) und einer Außenumfangsfläche (21) der Welle ein Ringspalt gebildet ist,

7. Strömungsmaschine (1) gemäß einem der Ansprüche 1 bis 6, wobei die Strömungsmaschine (1) von einer Turbomaschine gebildet ist.

8. Strömungsmaschine (1) gemäß Anspruch 7, wobei die Strömungsmaschine (1) von einer Gasturbine oder einem Turboverdichter gebildet ist.

## Claims

1. A flow machine (1) comprising a stator (10), a rotor (20) mounted rotatably relative to the stator (10) and a brush seal (50') which seals a gap (S) formed in a radial direction (RR) between stator (10) and rotor (20) against fluid passage, wherein the brush seal (50') comprises a brush holder (51) and a plurality of sealing bristles (52) each having a first end which is fastened to the brush holder (51) and a second end in contact with a sealing surface (D'), the sealing surface (D') is rotationally displaceable relative to the second end of the respective sealing bristles (52), wherein the sealing surface (D') is formed by a circumferential surface of an intermediate sleeve (60) which radially divides the gap (S) arranged between stator (10) and rotor (20), and wherein the intermediate sleeve (60) has a flange (62) by means of which the intermediate sleeve (60) is mounted in a torque-proof manner on a flange mounting section (22) of the rotor (20), **characterized in that** the rotor (20) is only connected to the intermediate sleeve (60) by the connection of its flange mounting section (22) with the flange (62).

2. The flow machine (1) according to claim 1, wherein the intermediate sleeve (60) divides the gap (S) radially into a first gap portion adjoining the sealing surface (D') and a second gap portion adjoining the circumferential surface of the intermediate sleeve (60) facing away from (D') and wherein a radial extension of the second gap portion is greater than zero.

3. The flow machine (1) according to one of the preceding claims, wherein the flange (62) is mounted on the flange mounting section (22) by means of detachable fastening means.

4. The flow machine (1) according to claim 3, wherein the flange (62) is arranged on an axial end of the intermediate sleeve (60) so that the flange (62) has an annular flange surface at the axial end which abuts in a fluid-tight manner against a mounting surface of the flange mounting section (22).

5. The flow machine (1) according to one of claims 1 to 4, wherein the rotor (20) is formed by a shaft and the intermediate sleeve (60) is mounted in a torque-proof manner on the rotor (20), so that the sealing surface (D') is formed by an outer circumferential surface (61) of the intermediate sleeve (60) and the brush holder (51) is attached in a torque-proof manner on the stator (10).

6. The flow machine (1) according to claim 5, wherein an inner diameter of the intermediate sleeve (60) is greater than an outer diameter of the shaft so that an annular gap is formed between an inner circumferential surface of the intermediate sleeve (60) and an outer circumferential surface (21) of the shaft.

7. The flow machine (1) according to one of claims 1 to 6, wherein the flow machine (1) is formed by a turbo machine.

8. The flow machine (1) according to claim 7, wherein the flow machine (1) is formed by a gas turbine or a turbocompressor.

## Revendications

1. Turbomachine (1) comportant un stator (10), un rotor (20) positionné rotativement par rapport au stator (10) et un joint à brosse (50'), qui isole de manière étanche un interstice (S) formé dans une direction radiale (RR) entre le stator (10) et le rotor (20) contre un passage de fluide, dans laquelle le joint à brosse (50') présente un porte-balai (51) et une pluralité de soies d'étanchéité (52), qui présentent respectivement une première extrémité, qui est fixée sur le porte-balai (51), et une deuxième extrémité, qui est en contact avec une surface d'étanchéité (D'), la surface d'étanchéité (D') est déplaçable en rotation relativement aux deuxièmes extrémités des soies d'étanchéité respectives (52), dans laquelle la surface d'étanchéité (D') est formée par une surface circonférentielle d'une douille intermédiaire (60) divisant radialement l'interstice (S) disposé entre le stator (10) et le rotor (20) et dans laquelle la douille intermédiaire (60) présente une bride (62), par l'intermédiaire de laquelle a douille intermédiaire (60) est montée de manière solidaire en rotation sur une portion de montage de bride (22) du rotor (20), **caractérisée en ce que** le rotor (20) est relié à la douille intermédiaire (60) uniquement via la liaison de la portion de montage de bride (22) de cette dernière avec la bride (62).

2. Turbomachine (1) selon la revendication 1, dans laquelle la douille intermédiaire (60) l'interstice (S) radialement dans une première portion d'interstice contiguë à la surface d'étanchéité (D') et une deuxième portion d'interstice contiguë à la surface d'étanchéité (60) qui se détourne de la douille intermédiaire (60) et dans laquelle une extension radiale de la deuxième portion d'interstice est plus grande que zéro.

3. Turbomachine (1) selon une des revendications précédentes, dans laquelle la bride (62) est montée au moyen d'un moyen de fixation amovible sur la portion de montage de bride (22).

4. Turbomachine (1) selon la revendication 3, dans laquelle la bride (62) est disposée à une extrémité axiale de la douille intermédiaire (60), de sorte que la bride (62) présente à l'extrémité axiale une surface de bride annulaire, qui vient reposer de manière étanche aux fluides sur une surface de montage de la portion de montage de bride (22).

5. Turbomachine (1) selon une des revendications 1 à 4, dans laquelle le rotor (20) est formé par un arbre et la douille intermédiaire (60) est montée de manière solidaire rn rotation sur le rotor (20), de sorte que la surface d'étanchéité (D') soit formée par une surface circonférentielle extérieure (61) de la douille intermédiaire (60) et le porte-balai (51) est monté de manière solidaire en rotation sur le stator (10) .

6. Turbomachine (1) selon la revendication 5, dans laquelle un diamètre intérieur de la douille intermédiaire (60) est plus grand qu'un diamètre extérieur de l'arbre, de sorte qu'entre la surface circonférentielle intérieure de la douille intermédiaire (60) et une surface circonférentielle extérieure (21) de l'arbre un interstice annulaire soit formé.

7. Turbomachine (1) selon une des revendications 1 à 6, dans laquelle la turbomachine (1) est formée par une turbomachine.

8. Turbomachine (1) selon la revendication 7, dans laquelle la turbomachine (1) est formée par une turbine à gaz ou un turbompresseur.
